# EUROPEAN PATENT SPECIFICATION

(11) **EP 0 588 542 B1**
(45) Date of publication and mention of the grant of the patent: **17.03.1999**
(21) Application number: 93307017.9
(22) Date of filing: 06.09.1993
(51) Int. Cl.: H04N 7/08, H04N 7/00

(54) **Multiple QAM digital television signal encoder**
Mehrfach QAM-Kodierer für digitale Fernsehsignale
Codeur QAM multiple de signaux de télévision numériques

(30) Priority: 16.12.1992 US 991625; 10.09.1992 GB 9219185
(43) Date of publication of application: 23.03.1994
(73) Proprietor: THOMSON CONSUMER ELECTRONICS, INC., Indianapolis Indiana 46206 (US)
(72) Inventor: Wang, Tian Jun, Indianapolis, Indiana 46202 (US); Christopher, Lauren Ann, Indianapolis, Indiana 46220 (US)
(74) Representative: Ahrens, Thomas, Dipl.-Phys.

(56) References cited:
- EP-A- 0 497 395
- WO-A-92/14343
- IEEE JOURNAL ON SELECTED AREAS IN COMMUNICATIONS, vol.8, no.8, October 1990 pages 1512 - 1519 H. SAMUELI ET AL 'A VLSI Architecture for a High-Speed All-Digital Quadrature Modulator and Demodulator for Digital Radio Applications.'
- IEEE TRANSACTIONS ON CONSUMER ELECTRONICS, vol.39, no.3, August 1993, NEW YORK US pages 684 - 690, XP396349 B. LEDOUX ET AL 'Advanced Television Signal Generation for Study of Interference into NTSC.'

## Description

This invention concerns a digital high definition television (HDTV) signal encoding system using multiple quadrature amplitude modulated (QAM) signals. In particular, this invention concerns a prioritized dual carrier QAM encoding system of the type described in European Patent Application 92904743.9 published under the number WO-A- 92 14 343 on 20-08-1992 (US patent application Serial No. 650,329 of H.E. White filed February 4, 1991) and in US Patent US-A-5,122,875 - Raychaudhuri et al issued June 16, 1992.

In a QAM symbol transmission system of the type disclosed, a transmitted data symbol is represented by both "I" and "Q" quadrature components which modulate respective quadrature phased carriers. Each symbol may comprise several bits, and the number of symbols dictates the type of QAM system, i.e., 16-QAM, 32-QAM, etc. Each symbol is mapped (assigned) to a prescribed location in a four-quadrant grid-like constellation using a look-up table (e.g., a ROM). A prescribed number of symbols occupy assigned areas in each quadrant. In a 32-QAM system, each quadrant of the constellation contains eight symbols at prescribed coordinates with respect to quadrature I and Q axes. Certain symbol bits designate the constellation quadrant in which a symbol is located, and certain bits designate the particular coordinate in that quadrant assigned to the symbol. QAM systems of this general type are well known.

White and Raychaudhuri et al. describe aspects of a system wherein a television signal representing high definition image information is transmitted using two QAM carriers frequency multiplexed in a standard 6 MHz television transmission baseband. One of the carriers conveys high priority information, while the other carrier conveys (relatively lower) standard priority information. The high priority (HP) information is the information needed to create a viewable image, although less than a perfect image, and is conveyed with significantly more power than the standard priority (SP) information, which is the remaining information. The high priority information exhibits a narrow bandwidth compared to the standard priority information,
and is therefore much less prone to corruption by the transmission channel. The HP carrier is located in that portion of the frequency spectrum of a television transmission channel, e.g., and NTSC channel, which is normally occupied by the vestigial sideband of a standard NTSC television signal. This portion of the signal is normally significantly attenuated by the Nyquist filters of standard receivers, so that HDTV signals with this transmission format will not introduce co-channel interference.

A straightforward approach to encoding such a dual QAM signal is to use two parallel paths for encoding and modulating two QAM signals independently. After the two encoded QAM signals have been converted from digital to analog format, two frequency translators merge the encoded QAM signals into a composite dual QAM signal with carriers situated at appropriate spectral locations. In accordance with the principles of the present invention, an illustrative system encodes a prioritized multiple carrier QAM HDTV signal so as to reduce circuit complexity and production costs, e.g., by reducing overall circuit size and integrated circuit surface area in particular, without compromising the quality of an encoded QAM signal.

Document WO-A-92/14343 concerns a modulator/demodulator for a compatible HDTV system, while document EP-A-0497395 concerns a transmission apparatus of a multicarrier digital television signal.

The object of the invention is an apparatus for processing a high definition television signal comprising:
means for providing a first digital signal representing first information and having quadrature components;
means for providing a second digital signal representing second information and having quadrature components;
first digital signal processing means responsive to said first and second digital signals for providing a first carrier quadrature amplitude modulated (QAM) with said first information and having a first data rate, and a second carrier quadrature amplitude modulated with said second information and having a second data rate different from said first data rate; and characterized by,
second digital signal processing means including means for converting said first data rate of said first modulated carrier to said second data rate of said second modulated carrier to produce a data rate converted modulated first carrier, and means for combining said data rate converted modulated first carrier and said modulated second carrier, in digital form, to produce a composite multiple QAM carrier output signal.

In a disclosed preferred embodiment of the invention, high priority (HP) and standard priority (SP) signals are spectrally shaped by respective digital filters before being QAM modulated. The QAM modulated HP and SP components are combined by a digital processor, including a digital adder and interpolator, before being conveyed to a single digital-to-analog converter and associated analog network for RF transmission.

### Brief Description of the Drawing

FIGURE 1 is a block diagram of a digital HDTV QAM encoding system in accordance with the principles of the present invention.

FIGURE 2 shows details of a portion of the FIGURE 1 system.

FIGURE 3 depicts the video frequency spectrum of a dual QAM high definition television signal developed by the system of FIGURE 1.

FIGURE 4 shows an alternative arrangement of a digital filter portion of the FIGURE 1 system.

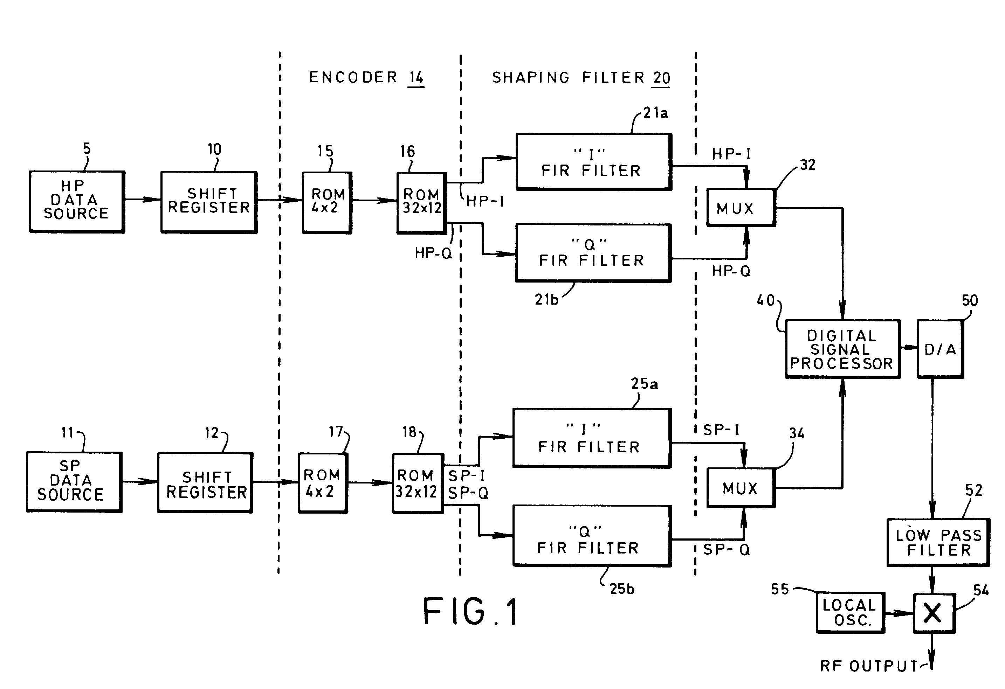

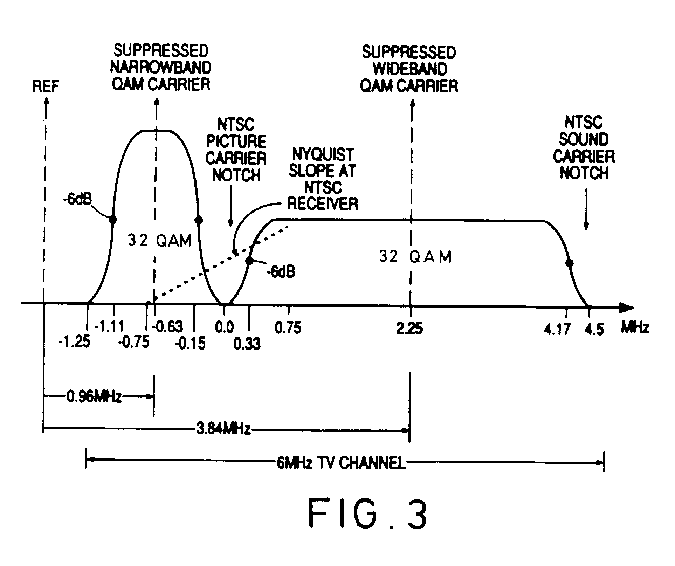

Before discussing the system shown in FIGURE 1, it will be helpful to consider FIGURE 3, which depicts the frequency spectrum of a prioritized dual 32-QAM baseband video signal produced by the disclosed system as will be discussed.

FIGURE 3 illustrates the video frequency spectrum of a high definition television signal which is compatible with the 6 MHz bandwidth of a standard NTSC television signal channel. To facilitate comparison with a standard NTSC video frequency spectrum, the frequencies along the frequency scale of FIGURE 3 (-1.25 MHz to 4.5 MHz) are referenced to the 0.0 MHz frequency location of the RF picture carrier in an NTSC system.

The HDTV signal is a data compressed signal divided into high and low priority components. In this example audio, synchronizing and low frequency video information components which are intended to be received with high reliability are assigned a high priority. The synchronizing information, for example, may be in the nature of a training signal containing a unique signature or code to facilitate signal recovery and processing at a receiver, and illustratively may include field rate scanning information (e.g., start of field markers). Other less critical components, such as high frequency video information, are assigned a lower priority. The high priority information exhibits a narrow bandwidth relative to the low priority information, and quadrature amplitude modulates (QAM) a 0.96 MHz first suppressed carrier referenced to a signal REF as discussed below. The low priority information quadrature amplitude modulates a 3.84 MHz second suppressed carrier which is also referenced to signal REF. A resulting composite signal is a form of a multiple QAM signal, i.e., a "dual" QAM signal in this instance. The composite dual QAM signal is translated into the 6 MHz standard television band by means of out-of-band reference signal REF. The frequency of signal REF is chosen so that when signal REF is modulated by the composite QAM signal, one of the resulting sum or difference components falls within the band of frequencies associated with a desired radio frequency television channel, such as simulcast VHF channel 3. Signal REF is modulated by the composite dual QAM signal to produce a double sideband modulated signal, the lower sideband of which is rejected and the upper sideband of which is retained as illustrated by FIGURE 3.

The amplitude of the narrowband HP QAM component is significantly greater than that of the wideband SP component, e.g., twice as large. The -6db bandwidth of the HP component is 0.96 MHz, and the -6db bandwidth of the SP component is 3.84 MHz, which is four times the bandwidth of the HP component. The nonlinear band edge transition regions of the narrowband HP and wideband SP components are shaped by finite impulse response (FIR) filters with a square root of a raised cosine characteristic, to produce smooth transition regions which avoid unwanted high frequency effects produced by sharp transition regions. The amplitude-versus-frequency response of the wideband SP component in the band edge transition regions (not drawn to scale) has one quarter the slope of the steeper narrowband HP component.

The HP and SP QAM signals each comprise quadrature "I" and "Q" components. A 32-QAM system processes five bit data words, or symbols. Eight symbols are disposed in each of four QAM constellation quadrants defined by I and Q axes. Each symbol is located at a prescribed constellation coordinate. Two bits of each symbol designate the constellation quadrant for that symbol, and three bits designate the coordinate for the symbol in the quadrant.

The 32-QAM system to be discussed exhibits symbol rates of 0.96 MHz and 3.84 MHz for the HP and SP data, respectively. The symbol rate is independent of the type of QAM processing being used (e.g., 16-QAM or 32-QAM). Using four times sampling of the symbol rate, the HP sampling rate is 3.84 MHz and the SP sampling rate is 15.36 MHz. At five bits per symbol in the case of 32-QAM, the HP and SP bit rates are 4.8 Mbps and 19.2 Mbps, respectively.

The described prioritized dual QAM system exhibits significant co-channel immunity from interference associated with a standard NTSC television signal, i.e., an NTSC signal transmitted from a different location in the same channel as the dual QAM signal. This is due to attenuating notches in the QAM spectrum in the vicinity of the NTSC RF picture carrier and the NTSC sound carrier, which are associated with high energy information. Conversely, co-channel interference from the dual QAM signal into an NTSC signal is significantly reduced because the large amplitude narrowband QAM signal will be significantly attenuated by a Nyquist slope filter in a standard NTSC television receiver. In FIGURE 3 the Nyquist slope filter response in a standard NTSC receiver is indicated by a dotted line superimposed on the low band portion of the QAM spectrum from -0.75 MHz to 0.75 MHz. The combination of the 6 db greater amplitude of the narrowband QAM component and its one-quarter bandwidth relative to the wideband QAM component results in a significantly greater power density than that of the wideband QAM component. The illustrated high priority narrowband QAM signal therefore exhibits a significant signal-to-noise improvement and lower error rate relative to the low priority wideband QAM signal.

The large peak amplitude narrowband component contains video information sufficient to produce a displayed image with definition approximating that of a standard definition television image. Thus a viewer should not be overly disturbed if, for example, the high definition transmission is momentarily disrupted by aircraft flutter. That is, if the low power wideband component containing the high definition information is disrupted momentarily, the high power narrowband component may be unaffected whereby a lower definition but acceptable image is displayed momentarily.

The sampling rates of the SP and HP QAM signals, 15.36 MHz and 3.84 MHz respectively, advantageously exhibit a 4:1 integer relationship. This relationship simplifies recovering the narrowband and wideband QAM information at a receiver, since the same derived data clock can readily be used for timing the data recovery operation of both QAM components. The required data clock rates for the receiver system can be easily derived from the readily recovered high power narrowband QAM signal.

In FIGURE 1, high priority (HP) data from a source 5 and standard priority (SP) data from a source 11 are processed in respective high priority and standard priority signal paths before being combined by a digital signal processor 40. The HP and SP data provided by sources 5 and 11 may be developed as disclosed in US patent 5,122,875-Raychaudhuri et al. Since the HP and SP signal processing paths between the data sources and unit 40 are structurally and operationally similar, only the HP processing path will be described in detail.

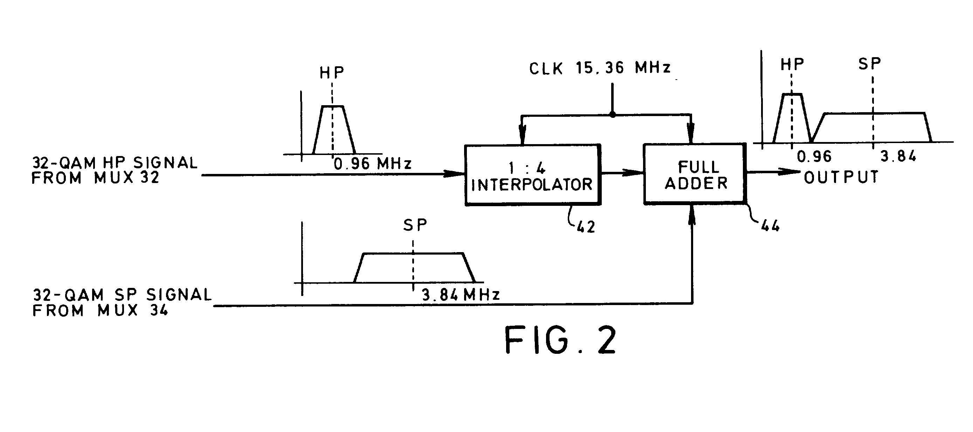

FIGURE 1 depicts a digital dual 32-QAM encoding system which is advantageously fabricated as an integrated circuit. Digital signal processor 40, which is shown in greater detail in FIGURE 2, merges HP and SP QAM signals in the digital domain so that only one digital-to-analog converter and one analog network are needed to generate an analog dual QAM signal for RF transmission.

The HP data stream from source 5 is converted from serial to 5-bit parallel form by shift register 10. The output from shift register 10 is applied to an encoder section 14 including ROM (Read Only Memory) units 15 and 16. Encoder 14 is used in accordance with conventional QAM encoding practice to facilitate decoding at a receiver. Specifically, the encoding provided by section 14 enhances receiver insensitivity to phase rotation of a received QAM constellation.

Unit 15 including an internal accumulator and look-up table has a 5-bit parallel input and a 5-bit parallel output. This ROM passes the last three bits (which specify the symbol coordinate) of each 5-bit symbol without processing, but examines the first two symbol bits which specify the quadrant. The accumulator accumulates the first two bits of the current symbol and the first two bits of the previous symbol. The look-up table provides a 2-bit output value representing the difference between these current and previous first two bits. The difference representative bits act as a reference for correctly identifying the QAM quadrants at a receiver. These bits are passed to the output of unit 15, where they are combined with the associated last three bits to reconstitute the 5-bit symbol.

ROM 16 acts as a data mapper for the continuous 5-bit parallel data stream from ROM 15. ROM 16 splits its input data stream into sequential 5-bit symbols. Using a look-up table, each 5-bit symbol is mapped into a four quadrant grid-like constellation defined by quadrature I and Q axes. In a 32-QAM system, eight 5-bit symbols occupy assigned areas in each quadrant. The first two bits of each symbol designate the quadrant in which the symbol is located with respect to the I and Q quadrature axes, and the remaining three bits designate the specific location (coordinate) assigned to the symbol within that quadrant. The next symbol is processed similarly. ROM 16 has two parallel outputs at which data words appear alternately. Alternating processed symbols are nominally designated as I and Q symbols, and respectively appear at the parallel I and Q outputs of ROM 16. For additional information concerning coding of the type performed by section 14, refer to the CCITT V.29 and V.32 standard.

ROM 16 provides HP I and Q output symbols in parallel form to digital filters 21a and 21b, respectively. These filters are 20-tap (20 coefficient) Finite Impulse Response (FIR) square root raised cosine digital low pass spectral shaping filters, clocked at the 3.84 MHz high priority sampling rate. Counterpart shaping filters 25a and 25b in the standard priority path are clocked at the 15.36 MHz sampling rate of the standard priority component. The shaping filters are used in accordance with conventional QAM signal processing practice to define the shape of the excess bandwidth response, i.e., the steepness of the bandedge slope, of the I and Q components. The excess bandwidth is approximately 17 percent in this example.

Filtered HP I and HP Q output signals from filters 21a and 21b are time multiplexed by means of a multiplexer 32. As will be explained subsequently, filters 21a and 21b cooperate with Mux 32 to develop a Quadrature Amplitude Modulated HP component, i.e., a 32-QAM HP component. The 32-QAM HP signal from unit 32 and a 32-QAM SP signal from counterpart Mux 34 in the standard priority path are processed by digital signal processor 40 to produce a single data stream (as will be discussed in connection with FIGURE 2) before being converted from digital to analog form by means of D/A converter 50. The output signal from converter 50 is low pass filtered by analog filter 52 before modulating a signal from local oscillator 55 in a modulator 54 to produce an output signal suitable for RF transmission. Filter 52 limits the output signal to the standard television channel bandwidth (6 MHz in the case of NTSC), and eliminates high frequency components such as harmonics associated with preceding digital signal processing. The baseband spectrum of the prioritized dual 32-QAM signal to be transmitted is of the form shown in FIGURE 3.

The process by which a digital filter (such as filters 21a and 21b in section 20) and a digital multiplexer (such as Mux 32) coact to produce digital Quadrature Amplitude Modulation is discussed by Samueli et al. in an article "A VLSI Architecture for a High-Speed A11-Digital Quadrature Modulator and Demodulator for Digital Radio Applications," IEEE Journal on Selected Areas in Communications, Vol. 8, No. 8, October 1990. Shaping filters 21a and 21b and output Mux 32 in the HP path essentially operate as sine/cosine carrier generators and mixers. The sampling rate of the shaping filters and of the output Mux in the HP path, and the sampling rate of the counterpart elements in the SP path, respectively establish the QAM HP and SP carrier frequencies. The sampling rate is four times the carrier frequency, and the carrier frequency equals the symbol rate.

By choosing the carrier frequency equal to the symbol rate, i.e., one-quarter the sampling rate, the cosine and sine waveform values needed for the mixing function can be obtained by sampling at 0, 90, 180 and 270 degrees. Such sampling produces values of 1, 0, -1, 0 for the cosine function, and values of 0, 1, 0, -1 for the sine function. A 2:1 multiplexer (such as Mux 32) and an inverter can perform the modulator mixing function. The inverter needed to perform the -1 multiplication in the mixing process can be implemented by assigning a negative sign to half of the shaping filter coefficients.

FIGURE 2 illustrates additional details of digital signal processor 40 in FIGURE 1. One input of processor 40 is the narrowband, relatively high energy 32-QAM HP component with a frequency spectrum centered at 0.96 MHz and a sampling rate of 3.84 MHz (4 x 0.96 MHz). This signal is applied to a 1:4 interpolator 42 which upsamples to 15.36 MHz. This action of interpolator 42 converts the narrowband HP data from a 3.84 MHz sample rate to a 15.36 MHz sample rate so that the HP data from Mux 32 and the SP data from Mux 34 have the same sample rate and can be combined properly in the digital time domain by digital full adder 44. This sample rate conversion is facilitated by the 4:1 integer relationship between the bandwidths and carrier frequencies of the SP and HP QAM signals. Adder 44 is clocked at 15.36 MHz and receives the 32-QAM SP signal from Mux 34 directly. The relative power levels, i.e., amplitudes, of the HP and SP signals are readily and accurately maintained in the digital domain such as by appropriate programming of the preceding ROM stages of encoder section 14, or by programming the coefficient values of the filters in shaping filter section 20. The dual QAM digital output signal from adder 44 is applied to a single digital-to-analog converter (50 in FIGURE 1) to produce a dual QAM analog signal for RF transmission.

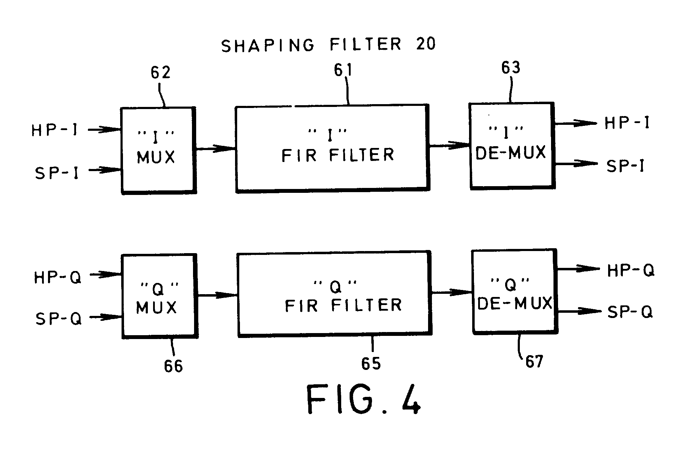

The number of filters used in shaping filter section 20 can be reduced in half by using a multiplexing technique as disclosed in European Patent Application 93305760.6 (US patent application Serial No 921,790 of Lauren Christopher titled "FIR Filter Apparatus For Multiplexed Processing of Time Division Multiplexed Signals", filed July 29, 1992) and in European Patent Application 9315185.0 (US patent application Serial No 922,104 of Lauren Christopher titled "Apparatus For Time Division Multiplexed Processing of Plural QAM Signals", filed July 29, 1992). Such an FIR filter for multiplexed pro-cessing of time multiplexed signal is illustrated generally by FIGURE 4.

In FIGURE 4, shaping filter section 20 includes multiplexed I and Q filters 61 and 65. Each is preceded by respective input time multiplexers 62 and 66, and followed by output time de-multiplexers 63 and 67, respectively. Input HP-I and HP-Q components are provided by ROM 16 in FIGURE 1, and input SP-I and SP-Q components are provided by ROM 181 in FIGURE 1. Output HP-I and HP-Q components are applied to output Mux 32 in FIGURE 1, and output SP-I and SP-Q components are applied to output Mux 34 in FIGURE 1. The following description of multiplexed filter 61 for I sample processing also applies to filter 65 for Q sample processing.

For every I (or Q) sample in the HP component, there are four I (or Q) samples in the SP component. Input Mux 62 therefore time division multiplexes HP and SP I samples at a ratio of four SP I samples to one HP I sample, and couples the resulting signal to multiplexed filter 61. Filter 61 is arranged to operate in time multiplexed fashion to reduce hardware requirements. Filter 61 is an input weighted FIR filter with an input bus for receiving the multiplexed samples from unit 62. These samples are applied to each of a plurality of weighting circuits where they are weighted by respective coefficients. Weighted samples from respective weighting circuits are coupled to respective adders, which adders are interconnected by delay stages. The delay stages are clocked at the sample rate to successively process the applied samples, and provide a filtered signal at the filter output at the last delay stage. Since the samples occur in the sequence SP, SP, SP, SP, HP, SP, SP, SP, SP, HP etc., SP delay stages are enabled or clocked when SP samples appear, and HP delay stages are enabled when HP samples appear. Thus HP samples are filtered independent of SP samples. Each time a particular sample type (HP or SP) is applied to the input, only those delay stages storing like-type samples are interconnected between adder circuits, forming a filter operative on only that type sample. That is, when SP (HP) samples are applied to the input, delay stages associated with HP (SP) samples are effectively removed from the circuit, although the information in them is retained. The filter exhibits two sets of coefficients which are switchable depending upon the type of input sample. Thus the filter provides different transfer functions for the different HP, SP samples by using different coefficents for the different sample types. One set of coefficients is applied to the weighting circuits when HP samples are present, and the other coefficient set is applied to the weighting circuits when SP samples are present, in response to a coefficient control signal. The output of filter 61 is a time division multiplexed signal wherein individual HP I and SP I components are independently filtered.

## Claims

1. Apparatus for processing a high definition television signal comprising:
means (5, 10) for providing a first digital signal representing first information and having quadrature components;
means (11, 12) for providing a second digital signal representing second information and having quadrature components;
first digital signal processing means (15-25) responsive to said first and second digital signals for providing a first carrier quadrature amplitude modulated, QAM, with said first information and having a first data rate, and a second carrier quadrature amplitude modulated with said second information and having a second data rate different from said first data rate; and characterized by,
second digital signal processing means (32, 34, 40) including means (42) for converting said first data rate of said first modulated carrier to said second data rate of said second modulated carrier to produce a data rate converted modulated first carrier, and means (44) for combining said data rate converted modulated first carrier and said modulated second carrier, in digital form, to produce a composite multiple QAM carrier output signal.

2. Apparatus according to claim 1, wherein
said first and second QAM carriers exhibit different carrier frequencies and different bandwidths occupying different portions of a television signal video spectrum.

3. Apparatus according to claim 1 wherein
said first QAM carrier exhibits a narrow bandwidth relative to said second QAM carrier and said first QAM carrier exhibits a carrier frequency having an integer relationship to a carrier frequency of said second QAM carrier.

4. Apparatus according to claim 1 and further including
digital-to-analog converter means (50) for converting said multiple QAM output signal from digital to analog form; and
analog signal transmission means (54, 55) for receiving an analog output signal from said converter means.

5. Apparatus according to claim 1, wherein said first digital signal processing means includes
digital filter means (21, 25) for spectrally shaping said first and second digital signals; and
multiplexing means (32, 34) responsive to output signals from said filter means for time division multiplexing filtered first information quadrature components to provide said first QAM carrier at an output, and for time division multiplexing filtered second information quadrature components to provide said second QAM carrier at an output.

6. Apparatus according to claim 1, wherein said second digital signal processing means comprises interpolator means (42) for converting said first data rate of said first QAM carrier; and
digital adder means (44) responsive to an output signal from said interpolator means and to said second QAM carrier for producing said composite multiple QAM output signal.

7. Apparatus according to claim 1, wherein
said multiple QAM output signal is a multiple 32 QAM output signal.

8. Apparatus according to claim 1, wherein
said first information modulating said first carrier exhibits a higher priority than said second information modulating said second carrier.

9. Apparatus according to claim 1, wherein
said first and second data rates exhibit an integer relationship.

## Patentansprüche

1. Vorrichtung zum Verarbeiten eines Fernsehsignals mit hoher Auflösung, enthaltend:
Mittel (5, 10) zum Liefern eines ersten digitalen Signals, das erste Informationen darstellt und Quadraturkomponenten enthält,
Mittel (11, 12) zum Liefern eines zweiten digitalen Signals, das zweite Informationen darstellt und Quadraturkomponenten enthält,
erste Verarbeitungsmittel (15-25) für das digitale Signal, die auf das erste und das zweite digitale Signal ansprechen und einen ersten Träger liefern, der mit den ersten Informationen quadratur-amplitudenmoduliert ist, QAM, und eine erste Datenrate aufweist, und einen zweiten Träger liefern, der mit den zweiten Informationen quadratur-amplitudenmoduliert ist und eine zweite gegenüber der ersten Datenrate unterschiedliche Datenrate aufweist, dadurch gekennzeichnet, daß
die zweiten Verarbeitungsmittel (32, 34, 40) für das digitale Signal Mittel (42) zum Umsetzen der ersten Datenrate des ersten modulierten Trägers auf die zweite Datenrate des zweiten modulierten Trägers enthalten und einen in der Datenrate umgesetzten, modulierten ersten Träger erzeugen, und Mittel (44) zum Kombinieren des in der Datenrate umgesetzten, modulierten ersten Trägers und des modulierten zweiten Trägers in digitaler Form enthalten, um ein zusammengesetztes QAM-Mehrfachträger-Ausgangssignal zu erzeugen.

2. Vorrichtung nach Anspruch 1, wobei
der erste und der zweite QAM-Träger unterschiedliche Trägerfrequenzen und unterschiedliche Bandbreiten aufweisen, die verschiedene Teile eines Fernsehsignal-Videospektrums einnehmen.

3. Vorrichtung nach Anspruch 1, wobei
der erste QAM-Träger eine relativ zu dem zweiten QAM-Träger geringe Bandbreite einnimmt und der erste QAM-Träger eine Trägerfrequenz aufweist, die in einem ganzzahligen Verhältnis zu einer Trägerfrequenz des zweiten QAM-Trägers steht.

4. Vorrichtung nach Anspruch 1, ferner enthaltend
Mittel (50) mit einem Digital/Analog-Konverter zum Umsetzen des Mehrfach-QAM-Ausgangssignals von der digitalen in die analoge Form und
Mittel (54, 55) zum Übertragen eines analogen Signals zum Empfangen eines analogen Ausgangssignals von den Konverter-Mitteln.

5. Vorrichtung nach Anspruch 1, wobei die Verarbeitungsmittel für das erste digitale Signal folgendes enthalten:
digitale Filtermittel (21, 25) zur Spektralformung des ersten und des zweiten digitalen Signals und
Multiplexmittel (32, 34), die auf die Ausgangssignale von den Filtermitteln ansprechen, um die gefilterten Quadraturkomponenten mit den ersten Informationen in ein Zeitmultiplex zu überführen und den ersten QAM-Träger an einem Ausgang zu liefern und zum Zeitmultiplexing der gefilterten Quadraturkomponenten mit den zweiten Informationen, um den zweiten QAM-Träger an einem Ausgang zu liefern.

6. Vorrichtung nach Anspruch 1, wobei
die Verarbeitungsmittel für das zweite digitale Signal Interpolatormittel (42) zum Umsetzen der ersten Datenrate des ersten QAM-Trägers und
digitale Addiermittel (44) enthalten, die auf ein Ausgangssignal von den Interpolatormitteln und auf den zweiten QAM-Träger ansprechen und das zusammengesetzte Mehrfach-QAM-Ausgangssignal erzeugen.

7. Vorrichtung nach Anspruch 1, wobei
das Mehrfach-QAM-Ausgangssignal ein Mehrfach-32-QAM-Ausgangssignal ist.

8. Vorrichtung nach Anspruch 1, wobei
die den ersten Träger modulierenden ersten Informationen eine höhere Priorität als die den zweiten Träger modulierenden zweiten Informationen aufweisen.

9. Vorrichtung nach Anspruch 1, wobei
die erste und die zweite Datenrate in einem ganzzahligen Zusammenhang stehen.

## Revendications

1. Dispositif de traitement d'un signal de télévision haute définition comportant :
un dispositif (5, 10) générant un premier signal numérique représentant les premières informations et ayant des composantes en quadrature,
un dispositif (11, 12) générant un second signal numérique représentant les secondes informations et ayant des composantes en quadrature,
un premier dispositif de traitement numérique du signal (15-25) qui, en fonction des premier et second signaux numériques, génère une première porteuse modulée en amplitude en quadrature, MAQ, par lesdites premières informations et ayant un premier débit, et une seconde porteuse modulée en amplitude en quadrature par lesdites secondes informations et ayant un second débit différent dudit premier débit de données et caractérisé par :
un second dispositif de traitement numérique du signal (32, 34, 40) comportant un dispositif de conversion (42) dudit premier débit de données de ladite première porteuse modulée dans ledit second débit de données de ladite seconde porteuse modulée de manière à générer une première porteuse modulée avec conversion du débit de données, et un dispositif (44) permettant de combiner sous forme numérique ladite première porteuse modulée avec conversion du débit de données et ladite seconde porteuse modulée, de manière à générer un signal de sortie MAQ multiporteuses composite.

2. Dispositif selon la revendication 1, où
lesdites première et seconde porteuses MAQ présentent des fréquences de porteuse et des bandes passantes différentes occupant différentes parties du spectre vidéo d'un signal de télévision.

3. Dispositif selon la revendication 1, où
ladite première porteuse MAQ présente une largeur de bande étroite par rapport à la seconde porteuse MAQ et ladite première porteuse MAQ présente une fréquence de porteuse ayant un rapport entier avec la fréquence de porteuse de ladite seconde porteuse MAQ.

4. Dispositif selon la revendication 1 comportant en outre
un dispositif convertisseur numérique-analogique (50) pour la conversion dudit signal de sortie MAQ multiple de la forme numérique à la forme analogique, et
un dispositif de transmission du signal analogique (54, 55) recevant un signal de sortie analogique dudit dispositif convertisseur.

5. Dispositif selon la revendication 1, où ledit premier dispositif de traitement numérique du signal comporte
un dispositif de filtrage numérique (21, 25) pour la mise en forme spectrale desdits premier et second signaux numériques, et
un dispositif de multiplexage (32, 34) qui, en fonction des signaux de sortie provenant desdits dispositifs de filtrage, multiplexe temporellement les composantes en quadrature filtrées des premières informations pour générer en sortie ladite première porteuse MAQ, et multiplexe temporellement les composantes en quadrature filtrées des secondes informations pour générer en sortie ladite seconde porteuse MAQ.

6. Dispositif selon la revendication 1, où ledit second dispositif de traitement du signal numérique comporte un dispositif d'interpolation (42) pour la conversion de la fréquence des données de ladite première porteuse MAQ, et
un dispositif additionneur numérique (44) qui, en fonction du signal de sortie dudit dispositif d'interpolation et de ladite seconde porteuse MAQ, génère ledit signal de sortie MAQ multiple composite.

7. Dispositif selon la revendication 1, où
ledit signal de sortie MAQ multiple est un signal de sortie 32-MAQ multiple.

8. Dispositif selon la revendication 1, où
lesdites premières informations modulant ladite première porteuse présentent une priorité plus élevée que lesdites secondes informations modulant ladite seconde porteuse.

9. Dispositif selon la revendication 1, où
lesdites première et seconde fréquences des données présentent un rapport entier.
